# EUROPEAN PATENT SPECIFICATION

(11) **EP 3 633 148 B1**
(45) Date of publication and mention of the grant of the patent: **09.08.2023**
(21) Application number: 19201715.0
(22) Date of filing: 07.10.2019
(51) Int. Cl.: F01D 5/14, F01D 5/18, F01D 9/06

(54) **COMPOSITE CAST POROUS METAL TURBINE COMPONENT AND CORRESPONDING FABRICATING METHODS**
PORÖSES METALLISCHES TURBINENBAUTEIL AUS VERBUNDGUSS UND ENTSPRECHENDE HERSTELLUNGSVERFAHREN
COMPOSANT DE TURBINE MÉTALLIQUE POREUX À COULÉE COMPOSITE ET MÉTHODES DE FABRICATION CORRESPONDANTES

(30) Priority: 05.10.2018 US 201816152522
(43) Date of publication of application: 08.04.2020
(73) Proprietor: Raytheon Technologies Corporation, Farmington, CT 06032 (US)
(72) Inventor: HENEVELD, Benjamin, Arlington, MA Massachusetts 02474 (US)
(74) Representative: Dehns

(56) References cited:
- JP-A- 2016 094 916
- US-A1- 2017 328 212
- US-A1- 2018 111 200
- US-B2- 7 144 220

## Description

### TECHNICAL FIELD

The subject matter disclosed herein generally relates to components of gas turbine engines and, more particularly, to a method and apparatus for cooling components of a gas turbine engine The present invention is directed to a component for a gas turbine engine as well as to methods of fabricating a component for a gas turbine engine.

### BACKGROUND

Commonly, discrete film cooling holes may be utilized in components in hot sections of a turbine engine. Discrete film cooling holes may result in uneven cooling as the areas immediately downstream from the cooling holes are cooler than the areas further away. Uneven cooling occurs due to the cool air mixing with hot air as the distance from the cooling hole exit increases. The uniformity of cooling can be affected by parameters such as spacing between cooling holes, turbulence in the cooling air flow, and other considerations. Inefficiency from uneven cooling requires more cooling air to be used than theoretically necessary. This decreases overall engine efficiency. US 7 144 220, US 2018/111200 and US 2017/328212 disclose turbine blades having porous increased heat transfer regions attached to the exterior of the body portion of the turbine blade, comprising a planar interfacial attachment surface where the porous and non-porous regions of the blade meet.

### SUMMARY

According to an embodiment of the present invention, a component for a gas turbine engine is provided. The component including: a body portion enclosing an interior compartment of the component, the body portion including an interior surface defining the interior compartment, an exterior surface opposite the interior surface, and one or more cooling holes within the body portion, wherein each of the one or more cooling holes extend from the interior surface to the exterior surface; a porous mesh liner at least partially enclosing the exterior surface of the body portion, the porous mesh liner being fluidly connected to the one or more cooling holes, wherein the cooling holes in operation direct cooling airflow from the interior compartment of the component into the porous mesh liner, and an attachment point located in the exterior surface of the body portion, wherein the porous mesh liner is attached to the exterior surface of the body portion via the attachment point, wherein the attachment point extends into the exterior surface of the body portion, characterized in that the attachment point includes a protruding undercut portion, wherein the attachment point includes a neck section at the exterior surface or proximate to an uppermost portion of the exterior surface, and wherein the attachment point includes a tapered section, the tapered section extends inwardly from the neck section and has an increasing width with increasing depth from the neck section to form the protruding undercut portion.

That the component may be a blade for the gas turbine engine.

The component may be a vane for the gas turbine engine.

The porous mesh liner may be a metal mesh liner.

The porous mesh liner may be a composite matrix.

The porous mesh liner may include one or more torturous paths leading from an outlet of the cooling hole toward outside of the component.

According to another embodiment of the present invention, a method of fabricating a component for a gas turbine engine is provided. The method including: manufacturing a body portion enclosing an interior compartment of the component, the body portion including an interior surface defining the interior compartment, an exterior surface opposite the interior surface, an attachment point on the exterior surface, and one or more cooling holes within the body portion, wherein each of the one or more cooling holes extends from the interior surface to the exterior surface; placing a fugitive mold defining an opening against the exterior surface such that the opening aligns with the attachment point; filling the opening with powdered metallic material; heating the cast metallic component and the powdered metallic material to a temperature above a sintering temperature of the powdered metallic material and below a melting temperature of the component; and attaching a porous mesh liner to the body portion via the attachment point, the porous mesh liner at least partially enclosing the exterior surface of the body portion, the porous mesh liner being fluidly connected to the one or more cooling holes, wherein the cooling holes in operation direct cooling airflow from the interior compartment of the component into the porous mesh liner, wherein the attachment point extends into the exterior surface of the body portion, wherein the component is a blade or a vane for the gas turbine engine, the porous mesh liner is a metal mesh liner or a composite matrix, and the porous mesh liner includes one or more torturous paths leading from an outlet of the cooling hole toward outside of the component, characterized in that the attachment point includes a protruding undercut portion, wherein the attachment point includes a neck section at the exterior surface or proximate to an uppermost portion of the exterior surface, and wherein the attachment point includes a tapered section, the tapered section extends inwardly from the neck section and has an increasing width with increasing depth from the neck section to form the protruding undercut portion.

According to another embodiment of the present invention, an alternative method of fabricating a component for a gas turbine engine is also provided. The method comprising: manufacturing a body portion enclosing an interior compartment of the component, the body portion including an interior surface defining the interior compartment, an exterior surface opposite the interior surface, an attachment point on the exterior surface, and one or more cooling holes within the body portion, wherein each of the one or more cooling holes extends from the interior surface to the exterior surface; placing a fugitive mold defining an opening against the exterior surface such that the opening aligns with the attachment point; filling the opening with powdered metallic material; and heating the cast metallic component and the powdered metallic material to a temperature above a sintering temperature of the powdered metallic material and below a melting temperature of the component, wherein a porous mesh liner is formed from the powered metallic material and secured to the body portion via the attachment point, the porous mesh liner at least partially enclosing the exterior surface of the body portion, wherein the porous mesh liner is fluidly connected to the one or more cooling holes that in operation direct cooling airflow from the interior compartment of the component into the porous mesh liner, wherein the attachment point extends into the exterior surface of the body portion, characterized in that the attachment point includes a protruding undercut portion, wherein the attachment point includes a neck section at the exterior surface or proximate to an uppermost portion of the exterior surface, and wherein the attachment point includes a tapered section, the tapered section extends inwardly from the neck section and has an increasing width with increasing depth from the neck section to form the protruding undercut portion.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting but are provided by way of example only. With reference to the accompanying drawings, like elements are numbered alike:
FIG. 1 is a partial cross-sectional illustration of a gas turbine engine, in accordance with an embodiment of the invention;
FIG. 2 illustrates a cross-sectional of a component of the gas turbine engine of FIG. 1, in accordance with an embodiment of the invention;
FIG. 3 illustrates an enlarged view of the component of FIG. 2, in accordance with an embodiment of the invention;
FIG. 4 is an enlarged cross-sectional view of the component of FIG. 2 and attachment points, in accordance with an embodiment of the invention;
FIG. 5 is an enlarged cross-sectional view of a component with a zig-zag, spiral, curved and multi-directional extrusion attachment points, in accordance with an illustrative example of the disclosure;
FIG. 6 is a view of a fugitive mold with opening placed against the component of FIG. 4 such that the openings align with the attachment points, in accordance with an embodiment of the invention;
FIG. 7 is a cross-sectional view of powdered metallic material filled into the openings of the fugitive mold of FIG. 6, in accordance with an embodiment of the invention;
FIG. 8 is an enlarged cross-sectional view of sintered elements securably attached to the component at the attachment points once the powdered metallic material of FIG. 7 has been cured and a remainder of the fugitive mold of FIG. 4 has been removed, in accordance with an embodiment of the invention;
FIG. 9 is an enlarged view of the encircled portion of FIG. 9, in accordance with an embodiment of the invention;
FIG. 10 is an enlarged cross-sectional view of an attachment point design that causes a tightening of the sintered elements due to curing in accordance with embodiments, in accordance with an embodiment of the invention; and
FIG. 11 is a flow diagram illustrating a method of fabricating a component in accordance with embodiments, in accordance with an embodiment of the invention.

### DETAILED DESCRIPTION

A detailed description of one or more embodiments of the disclosed apparatus and method are presented herein by way of exemplification and not limitation with reference to the Figures.

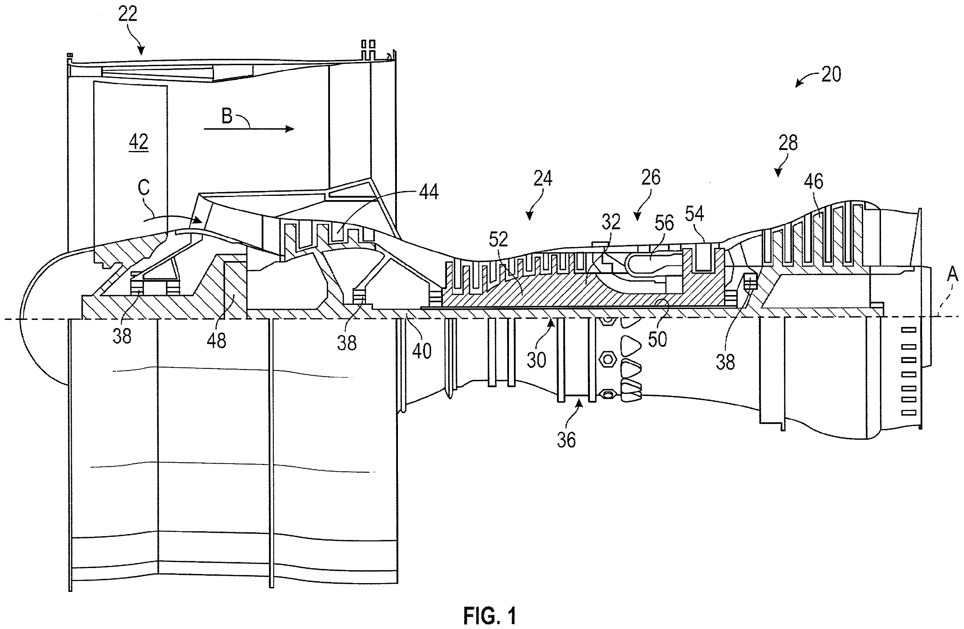

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach (270 m/sec) and about 35,000 feet (10,668 meters). The flight condition of 0.8 Mach (270 m/sec) and 35,000 ft (10,668 meters), with the engine at its best fuel consumption--also known as "bucket cruise Thrust Specific Fuel Consumption ("TSFC")"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5} ([(Tram °K)/(288 °K)]^{0.5}. The "Low corrected fan tip speed" as disclosed herein according to one non-limiting embodiment is less than about 1150 ft/second (350.5 m/sec).

As mentioned above, discrete film cooling holes may be utilized in components in hot sections of a gas turbine engine 20. Discrete film cooling holes may result in uneven cooling as the areas immediately downstream from the cooling holes are cooler than the areas further away. Uneven cooling occurs due to the cool air mixing with hot air as the distance from the cooling hole exit increases. The uniformity of cooling can be affected by parameters such as spacing between cooling holes, turbulence in the cooling air flow, and other considerations. Inefficiency from uneven cooling requires more cooling air to be used than theoretically necessary. This decreases overall engine efficiency. Embodiments disclosed herein seek to improve uniformity of cooling thereby reducing the amount of air necessary for adequate cooling.

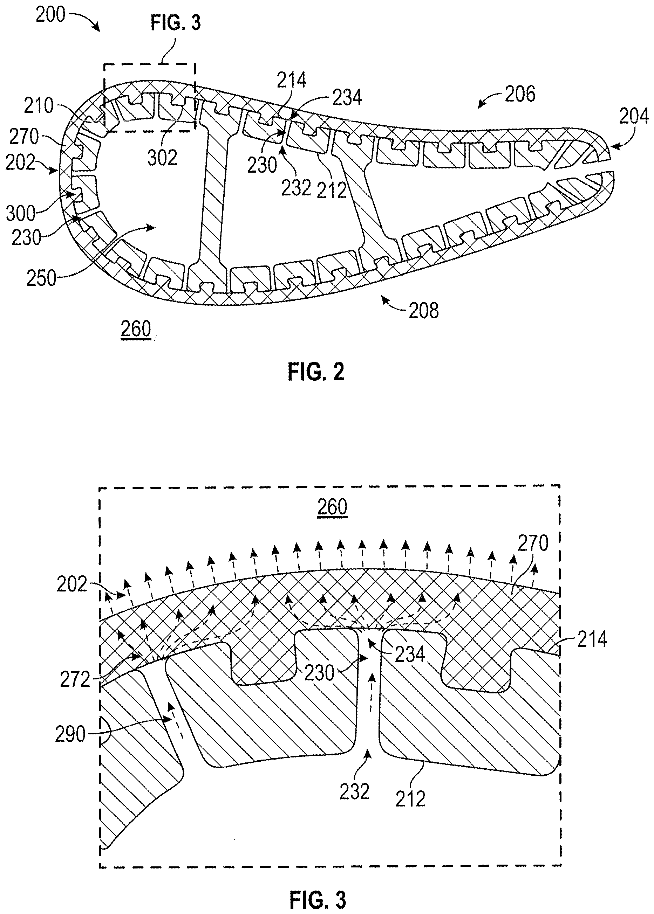

Referring now to FIGs. 2 and 3, with continued reference to FIG. 1, a cross-sectional view of a component 200 of the gas turbine engine 20 of FIG. 1. The component is illustrated as an airfoil of a blade or a vane for the gas turbine engine 20. The component 200 shown in FIG. 2 is an example illustration of a possible component (e.g., an airfoil) that may be utilized with embodiments disclosed herein and thus the embodiments disclosed herein may be utilized with components other than an airfoil. The component 200 includes a leading edge 202, a trailing edge 204 opposite the leading edge 202, a pressure side 206, and a suction side 208 opposite the pressure side 206.

The component 200 includes an interior compartment 250 and an exterior 260 (i.e. outside) of the component 200. The component 200 includes cooling holes 230 that fluidly connects the interior compartment 250 to the exterior 260 of the component 200. The component 200 includes a body portion 210 that encloses interior compartment 250. The body portion 210 includes an interior surface 212 defining the interior compartment 250 and an exterior surface 214 opposite the interior surface 202. The cooling holes 230 extend from an inlet 232 located on the interior surface 212 in the interior compartment 250 to an outlet 234 located on the exterior surface 214 of the component 200.

The component 200 includes a porous mesh liner 270 fluidly connected to at least one of the cooling holes 230. The cooling holes 230 in operation direct cooling airflow from the interior compartment 250 of the component 200 into the porous mesh liner 270. The porous mesh liner 270 may at least partially enclose the exterior surface 214 of the component 200. The cooling holes 230 lead cooling air 290 from interior compartment 250 to the porous mesh liner 270 at the outlet 234 of the cooling hole 230. The porous mesh liner 270 may be a metal mesh, a composite matrix, a screen, a woven filter, a non-woven filter, a porous film, or a combination thereof. The porous mesh liner 270 may be composed of a metal, including but not limited to any metal that can be processed by spark plasma sintering, ceramics, cermets, ceramic matrix composites, metal matrix composites, carbides, hybrid composites, other materials currently available , or any combination thereof. The porous mesh liner 270 includes one or more torturous paths 272 leading from the outlet 234 of the cooling hole 230 toward the exterior 260 of the component 200. The porous mesh liner 270 may include a porous mesh design having an internal microstructure to diffuse the cooling air 290 and improve uniformity of cooling along the exterior surface 214 of the component 200. Advantageously, the porous mesh design helps evenly spread cooling airflow across the exterior surface and throughout the porous mesh liner 270 to improve uniformity of cooling.

The porous mesh liner 270 is attached to the exterior surface 214 of the component 200. The porous mesh liner 270 may be attached to the exterior surface 214 via one or more attachment points 300 that are negative indentations that extend into the exterior surface 214, as shown in FIG. 2. The attachment points 300 are located in the exterior surface 214 of the body portion 210. The attachment points 300 may be formed through the use of TOMO, additive manufacturing, or other advanced manufacturing system. TOMO refers to the Tomo Lithographic Molding (TLM) process developed by Mikro Systems, Inc. of Charlottesville, V.A. as described in patent US 9,879,861 B2. The attachment point 300 includes protruding undercut portions 302 (e.g. dovetail) to mechanically fasten the porous mesh liner 270 to the exterior surface 214 of the component 200. Advantageously, the attachment points 300 may also increase the specific surface area for the adhesion between the porous mesh liner 270 and the exterior surface 214 of the component 200.

Advantageously, the interface between the body portion 210 and the porous mesh liner 270 increases the adhesion of the porous mesh liner 270 to the body portion 210 thereby improving the durability and extending the useful life of the component 200. Also advantageously, the ability of the porous mesh liner 270 to adapt to complex designs specific to the component 200 allows for the effective distribution and diffusion of the cooling air within the porous mesh liner 270. The resulting transpiration cooling can provide more uniform heat transfer and require less cooling air than traditional film cooling based only on discrete cooling holes. Further, the improved cooling uniformity can decrease the amount of cooling air required and thus improves the efficiency and/or performance of the gas turbine engine 20. The more uniform cooling provided by the porous mesh liner 270 may also improve the performance, efficiency, and/or durability of the component 200. Efficiency improvements may also lead to emissions reductions and improved environmental impact. Furthermore, the improved cooling efficiency provided by the porous mesh liner 270 may negate the need for more complicated cooling path geometry inside the component 200, which can simplify the required ceramic core geometry during manufacturing of the body portion thereby increasing yields and decreasing cost compared to more difficult to produce cores and castings.

As will be described below, a fabrication method is provided in which composite components that have a robust structure are formed by cast metal and detailed complex features (e.g., attachment points 300 of FIGs. 2 and 3) are formed by powdered metal. The fabrication method was developed by Mikro Systems, Inc. of Charlottesville, V.A. as described in U.S. patent application 16/023,879 filed on 06/29/2018.

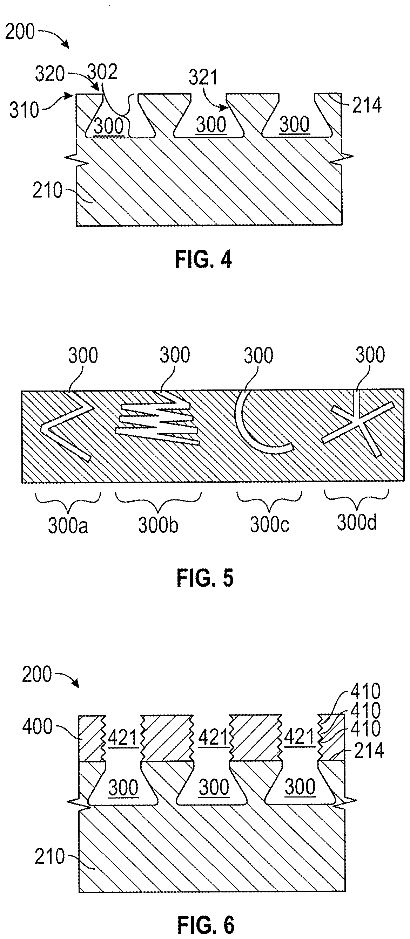

With reference to FIGS. 4-9, a method of fabricating a composite component (e.g., component 200) is provided. As shown in FIG. 4, a component 200 is cast in an initial operation with one or more appropriate fabrication techniques. The component 200 may be a cast metal component. The component 200 has an exterior surface 214 and is formed to define attachment points 300. In the illustrated embodiment, each attachment point 300 extends inwardly relative to a body portion 210 of the component 200 from an uppermost portion 310 of the exterior surface 214 and, in accordance with embodiments, may have a dovetail-shaped cross-section. That is, each attachment point 300 has a relatively narrow neck section 320 at or proximate to the uppermost portion 310 of the exterior surface 214 and a tapered section 321. The tapered section 321 extends inwardly from the neck section 320 and has an increasing width with increasing depth from the neck section 320 and thus forms protruding undercut portions 302.

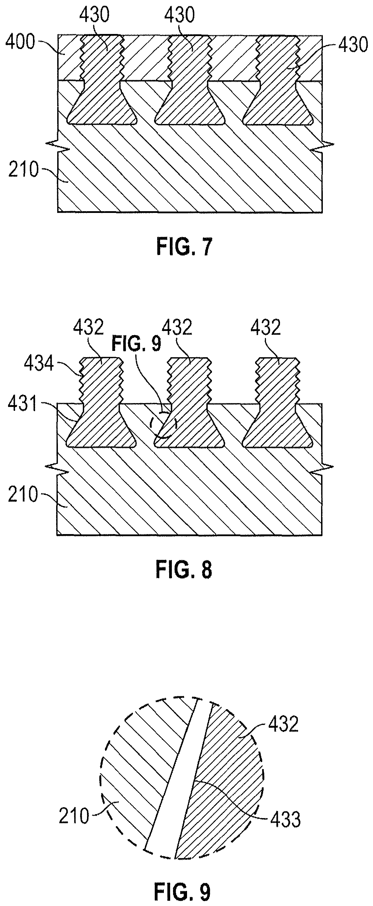

With reference to FIG. 5 and in accordance with illustrative examples, the attachment points can have various cross-sectional shapes and sizes and that, while the following description generally relates to the dovetail-shape case, this is not required. For example, as shown in FIG. 5, the attachment points 300 can be provided as zig-zag attachment points 300a, spiral attachment points 300b, curved attachment points 300c, and multi-directional extrusion attachment points 300d. In any case, the attachment points 300 should have a shape that can securely maintain a cured sintered element (see FIGS. 8 and 9) therein.

Next, as shown in FIG. 6, one or more fugitive molds 400 is placed against the exterior surface 214 of the component 200. The fugitive mold 400 may be configured to form or define engineered surface features or openings 421 that align with the attachment points 300. As a general matter, each of the openings 421 may have a more complex geometry than the attachment points 300 and, for example, they may have diameters that correspond to the diameters of the neck sections 320 (see FIG. 4) of the attachment points 300 and that may have protruding undercuts 302 or corrugations 410 along longitudinal axes thereof.

Once the one or more fugitive molds 400 are placed against the exterior surface 214, the openings 421 are filled with powdered metallic materials 430 as shown in FIG. 7.

As shown in FIGs. 8 and 9, the powdered metallic materials 430 cured into sintered elements 432 and remainders of the one or more fugitive molds 400 are removed. The curing involves heating the component 200 and the powdered metallic materials to a temperature which is above the sintering temperature of the powdered metallic materials and below the melting point of the component 200. The heating continues until the powdered metallic materials are sufficiently densified and form the sintered elements 432.

Each sintered element 432 has a cross-sectional shape which mimics the cross-sectional shapes of the attachment point 300 and the opening 421 it is formed in. Thus, each sintered element 432 has a first part 431 and a second part 434. The first part 431 is formed within the neck portion 320 and the tapered portion 321 of the corresponding attachment point 300. The second part 434 is integrally coupled to the first part 431 and extends from the first part 431 to protrude outwardly from the exterior surface 214. In an event the corresponding attachment point 300 has a dovetail-shape and the corresponding opening 421 is corrugated, the first part 431 will have a corresponding dovetail-shape 310 and the second part 434 will have a corresponding corrugated shape 320.

In accordance with embodiments, a final volume of each of the sintered elements 432 may be reduced from an initial volume of the powdered metallic material of the corresponding attachment point 300 and the corresponding opening 421. This volume reduction is a consequence of the curing process and may result in up to 15% reduction in volume. This can be seen in FIG. 9 in which the local edge 433 of the sintered element 432 is shown as having receded from the edge of the tapered section 321 of the corresponding attachment point 300.

To the extent that the volume reduction or shrinkage illustrated in FIG. 9 occurs, the cross-sectional shapes of the attachment points 300 are designed to secure the sintered elements 432. For the dovetail-shaped attachment points 300, the diameter of the neck portion 320 (see FIG. 4) should be sufficiently small as compared to the proximal portion of the tapered section 321 (see FIG. 4) so as to limit potential movement of the resulting sintered element 432 with the volume reduction having occurred.

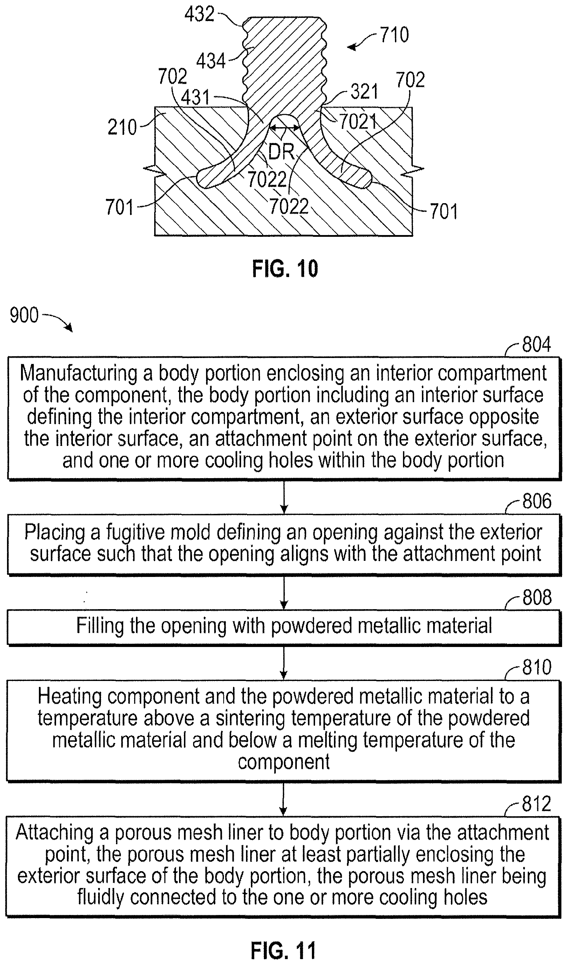

With reference to FIG. 10 and, in accordance with further embodiments of the disclosure, the securing of the sintered elements 432 in the attachment points 300 may be achieved by the use of fasteners to fasten the sintered elements 432 in the attachment points 300 or by the design or geometry of the attachment points 300 whereby the sintered elements 432 tighten into position even with the volume reduction occurring (see FIG. 10).

That is, as shown in FIG. 10, the geometry of the attachment point 300 includes two or more attachment features 701 for a given sintered element 432. These attachment features 701 may be defined substantially opposite one another and may be designed such that the shrinkage of the sintered element 432 during the sintering thereof automatically results in a compression pressure being exerted between the sintered attachment protrusions 702 and the substrate material in and around the sintered attachment protrusions 702. The compression pressure serves to prevent the movement of the sintered element 432 with respect to the component 200 and may increase an effective heat transfer between the component 200 and the sintered element 432.

In particular, the attachment features 701 may extend into the body portion 210 of the component 200 curvi-linearly outwardly such that the resulting sintered attachment protrusions 702 similarly extend into the component 200 curvi-linearly. The attachment features 701 taper away from each other with increasing depth into the component 200 and the sintered attachment protrusions 702 similarly taper away from each other with increasing depth into the component 200. Each attachment feature 701 and each corresponding sintered attachment protrusion 702 can have a substantially similar radius of outward curvature. Outer surfaces 7021 of the sintered attachment protrusions 702 may be nearly aligned in a radial dimension with an exterior surface 321 of the second part 434 and inner surfaces 7022 of the sintered attachment protrusions 702 may be separated from one another by a radial distance DR. The first and second parts 431 and 434 of the given sintered element 432 thus cooperatively form a tooth-root shaped element 710. While element 432 is shown to be a stand-alone feature, it can serve as a node that is connected to other similar nodes in a porous mesh. The connection between nodes are similarly formed by powdered metal in a fugitive mold and may entail one or more flexures designed to withstand applicable shrinkage should the porous mesh be manufactured by a process such as spark plasma sintering. The size of and the spacing between the flexures can be engineered to control the porosity of the mesh. In other embodiments, a separate porous mesh is attached to element 432 in a separate process.

Referring now to FIG. 11, while referencing components of FIGs. 1-10. FIG. 11 shows a flow chart of method 900 of fabricating a component 200 for a gas turbine engine 20. At block 804, a body portion 210 is manufactured by conventional investment casting, additive manufacturing, or other appropriate method. The body portion 210 encloses an interior compartment 250 of the component 200 and includes an interior surface 212 defining the interior compartment 250, an exterior surface 214 opposite the interior surface 212, an attachment point 300 on the exterior surface 214, and one or more cooling holes 230 within the body portion extending from the interior surface 212 to the exterior surface 214.

At block 806, a fugitive mold 400 defining an opening 421 is placed against the exterior surface 214 such that the opening 421 aligns with the attachment point 300.

At block 808, the opening 421 is filled with powdered metallic material 430. At block 810, the component 200 and the powdered metallic material 430 is heated to a temperature above a sintering temperature of the powdered metallic material 430 and below a melting temperature of the component 200. In one embodiment, heating the powdered metallic material 430 at block 810 forms the porous mesh liner 270. At block 812, in embodiments where the powdered metallic material 430 did not entail the porous mesh 270, a porous mesh liner 270 is attached to the body portion 210 via the attachment point 300. As such, it should be seen that block 812 is an optional step that is not required for all embodiments of the disclosure. As mentioned above, the porous mesh liner 270 at least partially encloses the exterior surface 214 of the body portion 210. The porous mesh liner 270 is fluidly connected to the one or more cooling holes 230. The cooling holes 230 in operation direct cooling airflow from the interior compartment 250 of the component 200 into the porous mesh liner 270.

While the above description has described the flow process of FIG. 11 in a particular order, it should be appreciated that unless otherwise specifically required in the attached claims that the ordering of the steps may be varied.

Benefits of the features described herein are the provision for production of a composite component that takes advantage of the beneficial properties of different manufacturing techniques and material systems. The fabrication methods can rely on a cast substrate for structural and creep resistance purposes and can use powdered metal features to create additional surface area or detailed geometry that could not be achievable with cast metal due to recrystallization, tooling costs or other limitations. Additionally, tooling costs for a fugitive mold is significantly less than for a traditional wax pattern tool set. This allows for multiple different fugitive molds to be used on a single substrate thereby allowing numerous and varying designs to be produced and tested while requiring less tooling cost and time as compared to having to use different traditional tool sets. This can in turn allow for multiple complex designs to be built and tested for less cost than a single complex design, which is fabricated using conventional techniques and can result in faster innovations and a more valuable final product.

Technical effects of embodiments of the present disclosure include adhering a porous mesh to a substantially solid substrate to create a composite cast/porous metal turbine component to enable cooling of the metal turbine component by passing cooling air through the porous mesh liner.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A component (200) for a gas turbine engine (20), comprising:
a body portion (210) enclosing an interior compartment (250) of the component, the body portion including an interior surface (212) defining the interior compartment, an exterior surface (214) opposite the interior surface, and one or more cooling holes (230) within the body portion, wherein each of the one or more cooling holes extend from the interior surface to the exterior surface;
a porous mesh liner (270) at least partially enclosing the exterior surface of the body portion, the porous mesh liner being fluidly connected to the one or more cooling holes,
wherein the cooling holes in operation direct cooling airflow from the interior compartment of the component into the porous mesh liner; and
an attachment point (300) located in the exterior surface of the body portion, wherein the porous mesh liner is attached to the exterior surface of the body portion via the attachment point,
wherein the attachment point extends into the exterior surface of the body portion, **characterized in that**
the attachment point includes a protruding undercut portion (302),
wherein the attachment point includes a neck section (320) at the exterior surface (214) or proximate to an uppermost portion (310) of the exterior surface (214), and
wherein the attachment point includes a tapered section (321), the tapered section (321) extends inwardly from the neck section (320) and has an increasing width with increasing depth from the neck section (320) to form the protruding undercut portion (302).

2. The component (200) of claim 1, wherein the component is a blade for the gas turbine engine (20), or
wherein the component is a vane for the gas turbine engine.

3. The component (200) of claim 1 or 2, wherein the porous mesh liner (270) is a metal mesh liner, or
wherein the porous mesh liner is a composite matrix.

4. The component (200) of claims 1, 2 or 3, wherein the porous mesh liner (270) includes one or more torturous paths (272) leading from an outlet (234) of the cooling hole (230) towards the outside of the component.

5. A method (900) of fabricating a component (200) for a gas turbine engine (20), the method comprising:
manufacturing a body portion (210) enclosing an interior compartment (250) of the component, the body portion including an interior surface (212) defining the interior compartment, an exterior surface (214) opposite the interior surface, an attachment point (300) on the exterior surface, and one or more cooling holes (230) within the body portion, wherein each of the one or more cooling holes extends from the interior surface to the exterior surface;
placing a fugitive mold (400) defining an opening (421) against the exterior surface such that the opening aligns with the attachment point;
filling the opening with powdered metallic material;
heating the cast metallic component and the powdered metallic material to a temperature above a sintering temperature of the powdered metallic material and below a melting temperature of the component; and
attaching a porous mesh liner (270) to the body portion via the attachment point, the porous mesh liner at least partially enclosing the exterior surface of the body portion,
wherein the porous mesh liner is fluidly connected to the one or more cooling holes,
wherein the cooling holes in operation direct cooling airflow from the interior compartment of the component into the porous mesh liner,
wherein the attachment point extends into the exterior surface of the body portion,
wherein the component (200) is a blade or a vane for the gas turbine engine (20),
wherein the porous mesh liner (270) is a metal mesh liner or a composite matrix,
wherein the porous mesh liner (270) includes one or more torturous paths (272) leading from an outlet (234) of the cooling hole (230) towards the outside of the component (200), **characterized in that**
the attachment point includes a protruding undercut portion (302),
wherein the attachment point includes a neck section (320) at the exterior surface (214) or proximate to an uppermost portion (310) of the exterior surface (214), and
wherein the attachment point includes a tapered section (321), the tapered section (321) extends inwardly from the neck section (320) and has an increasing width with increasing depth from the neck section (320) to form the protruding undercut portion (302).

6. A method of fabricating a component (200) for a gas turbine engine (20), the method comprising:
manufacturing a body portion (210) enclosing an interior compartment (250) of the component, the body portion including an interior surface (212) defining the interior compartment, an exterior surface (214) opposite the interior surface, an attachment point (300) on the exterior surface, and one or more cooling holes (230) within the body portion, wherein each of the one or more cooling holes extends from the interior surface to the exterior surface;
placing a fugitive mold (400) defining an opening (421) against the exterior surface such that the opening aligns with the attachment point;
filling the opening with powdered metallic material; and
heating the cast metallic component and the powdered metallic material to a temperature above a sintering temperature of the powdered metallic material and below a melting temperature of the component,
wherein a porous mesh liner (270) is formed from the powdered metallic material and secured to the body portion via the attachment point, the porous mesh liner at least partially enclosing the exterior surface of the body portion,
wherein the porous mesh liner is fluidly connected to the one or more cooling holes that in operation direct cooling airflow from the interior compartment of the component into the porous mesh liner,
wherein the attachment point extends into the exterior surface of the body portion, **characterized in that**
the attachment point includes a protruding undercut portion (302),
wherein the attachment point includes a neck section (320) at the exterior surface (214) or proximate to an uppermost portion (310) of the exterior surface (214), and
wherein the attachment point includes a tapered section (321), the tapered section (321) extends inwardly from the neck section (320) and has an increasing width with increasing depth from the neck section (320) to form the protruding undercut portion (302).

## Patentansprüche

1. Bauteil (200) für ein Gasturbinentriebwerk (20), umfassend:
einen Körperabschnitt (210), der ein Innenfach (250) des Bauteils umschließt, wobei der Körperabschnitt eine Innenfläche (212), die das Innenfach definiert, eine der Innenfläche gegenüberliegende Außenfläche (214) und ein oder mehrere Kühllöcher (230) innerhalb des Körperabschnitts beinhaltet, wobei sich jedes des einen oder der mehreren Kühllöcher von der Innenfläche zur Außenfläche erstreckt;
eine poröse Netzauskleidung (270), die die Außenfläche des Körperabschnitts zumindest teilweise umschließt, wobei die poröse Netzauskleidung mit dem einen oder den mehreren Kühllöchern in Fluidverbindung steht,
wobei die Kühllöcher im Betrieb einen Kühlluftstrom aus dem Innenraum des Bauteils in die poröse Netzauskleidung leiten; und
einen Befestigungspunkt (300), der sich in der Außenfläche des Körperabschnitts befindet, wobei die poröse Netzauskleidung über den Befestigungspunkt an der Außenfläche des Körperabschnitts befestigt ist,
wobei sich der Befestigungspunkt in die Außenfläche des Körperabschnitts erstreckt, **dadurch gekennzeichnet, dass**
der Befestigungspunkt einen vorstehenden hinterschnittenen Abschnitt (302) beinhaltet,
wobei der Befestigungspunkt einen Halsabschnitt (320) an der Außenfläche (214) oder in der Nähe eines obersten Abschnitts (310) der Außenfläche (214) beinhaltet, und
wobei der Befestigungspunkt einen konischen Abschnitt (321) beinhaltet, der konische Abschnitt (321) sich von dem Halsabschnitt (320) nach innen erstreckt und mit zunehmender Tiefe von dem Halsabschnitt (320) eine zunehmende Breite aufweist, um den vorstehenden hinterschnittenen Abschnitt (302) zu bilden.

2. Bauteil (200) nach Anspruch 1, wobei das Bauteil eine Schaufel für das Gasturbinentriebwerk (20) ist, oder
wobei das Bauteil eine Leitschaufel für das Gasturbinentriebwerk ist.

3. Bauteil (200) nach Anspruch 1 oder 2, wobei die poröse Netzauskleidung (270) eine Metallgeflechtauskleidung ist, oder wobei die poröse Netzauskleidung eine Verbundstoffmatrix ist.

4. Bauteil (200) nach Anspruch 1, 2 oder 3, wobei die poröse Netzauskleidung (270) einen oder mehrere gewundene Pfade (272) aufweist, die von einem Auslass (234) des Kühllochs (230) zu der Außenseite des Bauteils führen.

5. Verfahren (900) zum Herstellen eines Bauteils (200) eines Gasturbinentriebwerks (20), wobei das Verfahren umfasst:
Fertigen eines Körperabschnitts (210), der ein Innenfach (250) des Bauteils umschließt, wobei der Körperabschnitt eine Innenfläche (212), die das Innenfach definiert, eine der Innenfläche gegenüberliegende Außenfläche (214), einen Befestigungspunkt (300) auf der Außenfläche und ein oder mehrere Kühllöcher (230) innerhalb des Körperabschnitts beinhaltet, wobei sich jedes des einen oder der mehreren Kühllöcher von der Innenfläche zu der Außenfläche erstreckt;
Platzieren einer flüchtigen Form (400), die eine Öffnung (421) definiert, gegen die Außenfläche, so dass die Öffnung mit dem Befestigungspunkt fluchtet;
Füllen der Öffnung mit pulverförmigem Metallmaterial;
Erwärmen der gegossenen Metallbauteils und des pulverförmigen Metallmaterials auf eine Temperatur über einer Sintertemperatur des pulverförmigen Metallmaterials und unter einer Schmelztemperatur des Bauteils; und
Anbringen einer porösen Netzauskleidung (270) an dem Körperabschnitt über dem Befestigungspunkt, wobei die poröse Netzauskleidung die Außenfläche des Körperabschnitts zumindest teilweise umschließt,
wobei die poröse Netzauskleidung mit dem einen oder den mehreren Kühllöchern in Fluidverbindung steht,
wobei die Kühllöcher im Betrieb einen Kühlluftstrom aus dem Innenraum des Bauteils in die poröse Netzauskleidung leiten,
wobei sich der Befestigungspunkt in die Außenfläche des Körperabschnitts erstreckt,
wobei das Bauteil (200) eine Lauf- oder Leitschaufel für das Gasturbinentriebwerk (20) ist,
wobei die poröse Netzauskleidung (270) eine Metallgeflechtauskleidung oder eine Verbundstoffmatrix ist,
wobei die poröse Netzauskleidung (270) einen oder mehrere gewundene Pfade (272) beinhaltet, die von einem Auslass (234) des Kühllochs (230) zu der Außenseite des Bauteils (200) führen,
**dadurch gekennzeichnet, dass** der Befestigungspunkt einen vorstehenden hinterschnittenen Abschnitt (302) beinhaltet,
wobei der Befestigungspunkt einen Halsabschnitt (320) an der Außenfläche (214) oder in der Nähe eines obersten Abschnitts (310) der Außenfläche (214) beinhaltet, und
wobei der Befestigungspunkt einen konischen Abschnitt (321) beinhaltet, der konische Abschnitt (321) sich von dem Halsabschnitt (320) nach innen erstreckt und mit zunehmender Tiefe von dem Halsabschnitt (320) eine zunehmende Breite aufweist, um den vorstehenden hinterschnittenen Abschnitt (302) zu bilden.

6. Verfahren zum Herstellen eines Bauteils (200) für ein Gasturbinentriebwerk (20), wobei das Verfahren umfasst:
Fertigen eines Körperabschnitts (210), der ein Innenfach (250) des Bauteils umschließt, wobei der Körperabschnitt eine Innenfläche (212), die das Innenfach definiert, eine der Innenfläche gegenüberliegende Außenfläche (214), einen Befestigungspunkt (300) auf der Außenfläche und ein oder mehrere Kühllöcher (230) innerhalb des Körperabschnitts beinhaltet,
wobei sich jedes des einen oder der mehreren Kühllöcher von der Innenfläche zu der Außenfläche erstreckt;
Platzieren einer flüchtigen Form (400), die eine Öffnung (421) definiert, gegen die Außenfläche, so dass die Öffnung mit dem Befestigungspunkt fluchtet;
Füllen der Öffnung mit pulverförmigem Metallmaterial; und
Erwärmen des gegossenen Metallbauteils und des pulverförmigen Metallmaterials auf eine Temperatur über einer Sintertemperatur des pulverförmigen Metallmaterials und unter einer Schmelztemperatur des Bauteils,
wobei eine poröse Netzauskleidung (270) aus dem pulverförmigen Metallmaterial gebildet und über den Befestigungspunkt an dem Körperabschnitt befestigt wird, wobei die poröse Netzauskleidung die Außenfläche des Körperabschnitts zumindest teilweise umschließt,
wobei die poröse Netzauskleidung mit einem oder mehreren Kühllöchern in Fluidverbindung steht, die im Betrieb den Kühlluftstrom aus dem Innenraum des Bauteils in die poröse Netzauskleidung leiten,
wobei sich der Befestigungspunkt in die Außenfläche des Körperabschnitts erstreckt, **dadurch gekennzeichnet, dass** der Befestigungspunkt einen vorstehenden hinterschnittenen Abschnitt (302) beinhaltet,
wobei der Befestigungspunkt einen Halsabschnitt (320) an der Außenfläche (214) oder in der Nähe eines obersten Abschnitts (310) der Außenfläche (214) beinhaltet, und
wobei der Befestigungspunkt einen konischen Abschnitt (321) beinhaltet, der konische Abschnitt (321) sich von dem Halsabschnitt (320) nach innen erstreckt und mit zunehmender Tiefe von dem Halsabschnitt (320) eine zunehmende Breite aufweist, um den vorstehenden hinterschnittenen Abschnitt (302) zu bilden.

## Revendications

1. Composant (200) pour un moteur à turbine à gaz (20), comprenant :
une partie de corps (210) renfermant un compartiment intérieur (250) du composant, la partie de corps comprenant une surface intérieure (212) définissant le compartiment intérieur, une surface extérieure (214) opposée à la surface intérieure, et un ou plusieurs trous de refroidissement (230) à l'intérieur de la partie de corps, dans lequel chacun des un ou plusieurs trous de refroidissement s'étend de la surface intérieure à la surface extérieure ;
une doublure en maille poreuse (270) enfermant au moins partiellement la surface extérieure de la partie de corps, la doublure en maille poreuse étant en communication fluidique avec les un ou plusieurs trous de refroidissement,
dans lequel les trous de refroidissement en fonctionnement dirigent un flux d'air de refroidissement depuis le compartiment intérieur du composant dans la doublure en maille poreuse ; et
un point de fixation (300) situé dans la surface extérieure de la partie de corps, dans lequel la doublure en maille poreuse est fixée à la surface extérieure de la partie de corps via le point de fixation,
dans lequel le point de fixation s'étend dans la surface extérieure de la partie de corps, **caractérisé en ce que**
le point de fixation comprend une partie saillante en contre-dépouille (302),
dans lequel le point de fixation comprend une section de col (320) au niveau de la surface extérieure (214) ou à proximité d'une partie la plus haute (310) de la surface extérieure (214), et
dans lequel le point de fixation comprend une section effilée (321), la section effilée (321) s'étend vers l'intérieur à partir de la section de col (320) et a une largeur croissante avec une profondeur croissante à partir de la section de col (320) pour former la partie saillante en contre-dépouille (302).

2. Composant (200) selon la revendication 1, dans lequel le composant est une ailette pour le moteur à turbine à gaz (20), ou
dans lequel le composant est une aube pour le moteur à turbine à gaz.

3. Composant (200) selon la revendication 1 ou 2, dans lequel la doublure en maille poreuse (270) est une doublure en maille métallique, ou
dans lequel la doublure en maille poreuse est une matrice composite.

4. Composant (200) selon les revendications 1, 2 ou 3, dans lequel la doublure en maille poreuse (270) comprend un ou plusieurs chemins tortueux (272) partant d'une sortie (234) du trou de refroidissement (230) vers l'extérieur du composant.

5. Procédé (900) de fabrication d'un composant (200) pour un moteur à turbine à gaz (20), le procédé comprenant :
la fabrication d'une partie de corps (210) renfermant un compartiment intérieur (250) du composant, la partie de corps comprenant une surface intérieure (212) définissant le compartiment intérieur, une surface extérieure (214) opposée à la surface intérieure, un point de fixation (300) sur la surface extérieure et un ou plusieurs trous de refroidissement (230) à l'intérieur de la partie de corps, dans lequel chacun des un ou plusieurs trous de refroidissement s'étend de la surface intérieure à la surface extérieure ;
le placement d'un moule fugitif (400) définissant une ouverture (421) contre la surface extérieure de sorte que l'ouverture s'aligne avec le point de fixation ;
le remplissage de l'ouverture avec un matériau métallique en poudre ;
le chauffage du composant métallique coulé et du matériau métallique en poudre à une température supérieure à une température de frittage du matériau métallique en poudre et inférieure à une température de fusion du composant ; et
la fixation d'une doublure en maille poreuse (270) à la partie de corps via le point de fixation, la doublure en maille poreuse enfermant au moins partiellement la surface extérieure de la partie de corps,
dans lequel la doublure en maille poreuse est en communication fluidique avec les un ou plusieurs trous de refroidissement,
dans lequel les trous de refroidissement en fonctionnement dirigent un flux d'air de refroidissement depuis le compartiment intérieur du composant dans la doublure en maille poreuse ;
dans lequel le point de fixation s'étend dans la surface extérieure de la partie de corps,
dans lequel le composant (200) est une ailette ou une aube pour le moteur à turbine à gaz (20),
dans lequel la doublure en maille poreuse (270) est une doublure en maille métallique ou une matrice composite,
dans lequel la doublure en maille poreuse (270) comprend un ou plusieurs trajets tortueux (272) partant d'une sortie (234) du trou de refroidissement (230) vers l'extérieur du composant (200), **caractérisé en ce que** le point de fixation comprend une partie saillante en contre-dépouille (302),
dans lequel le point de fixation comprend une section de col (320) au niveau de la surface extérieure (214) ou à proximité d'une partie la plus haute (310) de la surface extérieure (214), et
dans lequel le point de fixation comprend une section effilée (321), la section effilée (321) s'étend vers l'intérieur à partir de la section de col (320) et a une largeur croissante avec une profondeur croissante à partir de la section de col (320) pour former la partie saillante en contre-dépouille (302).

6. Procédé de fabrication d'un composant (200) pour un moteur à turbine à gaz (20), le procédé comprenant :
la fabrication d'une partie de corps (210) renfermant un compartiment intérieur (250) du composant, la partie de corps comprenant une surface intérieure (212) définissant le compartiment intérieur, une surface extérieure (214) opposée à la surface intérieure, un point de fixation (300) sur la surface extérieure et un ou plusieurs trous de refroidissement (230) à l'intérieur de la partie de corps, dans lequel chacun des un ou plusieurs trous de refroidissement s'étend de la surface intérieure à la surface extérieure ;
le placement d'un moule fugitif (400) définissant une ouverture (421) contre la surface extérieure de sorte que l'ouverture s'aligne avec le point de fixation ;
le remplissage de l'ouverture avec un matériau métallique en poudre ; et
le chauffage du composant métallique coulé et du matériau métallique en poudre à une température supérieure à une température de frittage du matériau métallique en poudre et inférieure à une température de fusion du composant ,
dans lequel une doublure en maille poreuse (270) est formée à partir du matériau métallique en poudre et fixée à la partie de corps via le point de fixation, la doublure en maille poreuse enfermant au moins partiellement la surface extérieure de la partie de corps,
dans lequel la doublure en maille poreuse est en communication fluidique avec les un ou plusieurs trous de refroidissement qui, en fonctionnement, dirigent un flux d'air de refroidissement depuis le compartiment intérieur du composant dans la doublure en maille poreuse,
dans lequel le point de fixation s'étend dans la surface extérieure de la partie de corps, **caractérisé en ce que** le point de fixation comprend une partie saillante en contre-dépouille (302),
dans lequel le point de fixation comprend une section de col (320) au niveau de la surface extérieure (214) ou à proximité d'une partie la plus haute (310) de la surface extérieure (214), et
dans lequel le point de fixation comprend une section effilée (321), la section effilée (321) s'étend vers l'intérieur à partir de la section de col (320) et a une largeur croissante avec une profondeur croissante à partir de la section de col (320) pour former la partie saillante en contre-dépouille (302).
